Europäisches Patentamt

(19) European Patent Office

Office européen des brevets

(11) Veröffentlichungsnummer: **0 142 596**
**B1**

(12) EUROPÄISCHE PATENTSCHRIFT

(45) Veröffentlichungstag der Patentschrift:
10.06.87

(21) Anmeldenummer: 84101824.5

(22) Anmeldetag: 22.02.84

(51) Int. Cl.⁴: **E 06 B 9/264**, E 06 B 9/24

(54) Wärmedämmendes Fenster.

(30) Priorität: 17.11.83 DE 3341485

(43) Veröffentlichungstag der Anmeldung:
29.05.85 Patentblatt 85/22

(45) Bekanntmachung des Hinweises auf die Patenterteilung:
10.06.87 Patentblatt 87/24

(84) Benannte Vertragsstaaten:
AT BE CH DE FR GB IT LI LU NL SE

(56) Entgegenhaltungen:
EP-A-0 044 560
DE-A-2 749 037
DE-A-2 922 441
DE-A-3 026 635

(73) Patentinhaber: Weiblen, Rolf- Diether, Eltener
Strasse 1, D-4330 Mülheim/Ruhr (DE)

(72) Erfinder: Weiblen, Rolf- Diether, Eltener Strasse 1,
D-4330 Mülheim/Ruhr (DE)

(74) Vertreter: Selting, Günther, Dipl.- Ing.,
Deichmannhaus am Hauptbahnhof, D-5000 Köln 1
(DE)

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

## Beschreibung

Die Erfindung betrifft ein wärmedämmendes Fenster für Gebäude, mit einem eine Fensteröffnung begrenzenden, in eine Wandöffnung einsetzbaren Blendrahmen und mindestens einer in der Fensteröffnung vorgesehenen Glasscheibe.

Ein großer Teil der Wärmeverluste an Gebäuden tritt im Bereich der Fenster auf. Andererseits haben die Fenster auch die Funktion von Sonnenkollektoren, indem sie einfallende Wärmestrahlung durchlassen, die im Gebäudeinnern in Wärme umgesetzt wird.

Aus DE-A-27 49 037 ist es bekannt, an einem Fenster einen wärmedämmenden Vorhang aus mehreren Vorhangbahnen zu montieren, die von Rollen abgewickelt werden und parallel zum Fenster verlaufende Luftkammern bilden können, in denen stehende Luftpolster erzeugt werden. Ein solcher wärmedämmender Vorhang aus mehreren Luftkammern kann z.B. nachts aufgespannt werden, um die im Gebäude vorhandene Wärme daran zu hindern, an den Glasflächen des Gebäudes auszutreten. Bei Sonneneinstrahlung kann der Vorhang aufgerollt werden, so daß die Wärmestrahlung ungehindert in das Gebäudeinnere gelangen kann. Die bekannten wärmedämmenden Vorhänge werden separat hinter einem Fenster angebracht und erfordern eine eigene Stützkonstruktion, die separat von dem Fenster im Gebäudeinnern montiert wird.

Der Erfindung liegt die Aufgabe zugrunde, ein wärmedämmendes Fenster der eingangs genannten Art zu schaffen, das eine integrierte Vorhangstruktur aufweist und dessen bauseitige Montage vereinfacht ist.

Die Lösung dieser Aufgabe erfolgt erfindungsgemäß mit den Merkmalen des Patentanspruchs 1.

Bei dem erfindungsgemäßen wärmedämmenden Fenster wird in die Außenwand des Gebäudes der Installationsrahmen fest eingebaut. An dem Installationsrahmen wird dann nachträglich der Blendrahmen befestigt, an dem die Glasscheibe entweder fest angebracht ist oder ein Flügelrahmen, der seinerseits die Glasscheibe trägt und geöffnet werden kann. Der Installationsrahmen dient einerseits der Unterbringung des wärmedämmenden Vorhangs und andererseits der Befestigung des Blendrahmens, der auf einfache Weise an dem Installationsrahmen angebracht werden kann, z.B. mit zuvor angebrachten Befestigungsteilen. Auf diese Weise werden aufwendige Montagearbeiten zur Anbringung des wärmedämmenden Vorhangs und auch zur Anbringung des Blendrahmens vermieden. Der Montagerahmen stellt ein vorgefertigtes Teil dar, das bauseitig in die Wandstruktur eingearbeitet wird und an dem alle übrigen Teile des Fensters nachträglich befestigt werden. Der Installationsrahmen ist also gewissermaßen in die Wand des Gebäudes integriert und er steht im allgemeinen auch nicht nach außen oder innen aus der Wand heraus. Bei aufgewickelten Vorhangbahnen kann das Licht ungehindert durch den Fensterraum hindurchdringen. Bei abgewickelten Vorhangbahnen wird der Fensterraum durch die Vorhangbahnen in mehrere Luftkammern unterteilt, in denen stehende Luft als wärmeisolierendes Medium vorhanden ist. Auf diese Weise erhält man eine sehr wirksame Wärmedämmung, ohne daß hierfür im Bereich des Fensters zusätzlicher Platz benötigt würde, mit Ausnahme des Hilfsraumes, in dem die Rollen angeordnet sind. Dieser Hilfsraum befindet sich aber im Innern der Wand und verkleinert nicht das nutzbare Volumen des Gebäudes.

Vorzugsweise ist der Hilfsraum von dem Fensterraum durch eine Zwischenwand getrennt, die Schlitze für den Durchtritt der Vorhangbahnen aufweist. Die Luftkammern werden hierbei an ihren oberen Enden durch die Zwischenwand verschlossen, so daß der Luftaustausch der Luftkammern unterbunden oder mindestens stark eingeschränkt wird. Zweckmäßigerweise ist der Fensterraum zum Gebäudeinnern hin durch mindestens eine weitere Glasscheibe begrenzt. Die weitere Glasscheibe kann in einem inneren Flügelrahmen befestigt sein, der an einem weiteren Blendrahmen angebracht ist, welcher seinerseits an dem Installationsrahmen befestigt ist. Hierdurch behält man vom Gebäudeinnern her Zugang zu dem Fensterraum, um beispielsweise durch Öffnen der Flügelrahmen von Innenfenster und Außenfenster Außenluft in das Gebäude hereinzulassen. Der Fensterraum ist vorzugsweise allseitig geschlossen. Der Installationsrahmen ermöglicht die Anbringung eines Innenfensters und eines Außenfensters. Das Innenfenster und/oder das Außenfenster können sich über die gesamte Höhe des Installationsrahmens erstrecken, so daß beim Öffnen eines der Fensterflügel nicht nur der Fensterraum geöffnet wird, sondern auch der Hilfsraum. Auf diese Weise erhält man zu Wartungs- oder Reinigungszwecken auf einfache Weise Zugang zu dem Hilfsraum, indem lediglich ein Fensterflügel geöffnet wird. Andererseits sollte vom Gebäudeinnern her keine Einblicksmöglichkeit in den Hilfsraum bestehen. Aus diesem Grunde ist es zweckmäßig, wenn der innere Flügelrahmen im Bereich des Hilfsraumes eine undurchsichtige Blende aufweist.

Zur Erzielung dichter Luftkammern und zur Verhinderung von Luftzirkulation zwischen den Luftkammern ist vorgesehen, daß der Installationsrahmen an seinen Seitenwänden vertikale Führungsschlitze aufweist, in die die Ränder der Vorhangbahnen eingreifen. Der Installationsrahmen kann auch eine Bodenwand mit Schlitzen zum Eingriff der unteren Kanten der Vorhangbahnen aufweisen. Auf diese Weise wird sichergestellt, daß bei entrollten Vorhangbahnen ein weitgehend luftdichter Abschluß der einzelnen Luftkammern erfolgt.

Gemäß einer bevorzugten Ausführungsform der Erfindung ist unter dem Fensterraum ein weiterer Hilfsraum zur Aufnahme von Klima- und Steuergeräten angeordnet. Der Installationsrahmen erstreckt sich hierbei bis in die Nähe des Fußbodens. Da der durchsichtige Fensterbereich erst in Brüstungshöhe beginnt, steht der Raum unterhalb des Fensterraumes als Hilfsraum zur Verfügung. In diesem Raum können Antriebsaggregate, Steuerungsaggregate, Klimageräte, Wärmetauscher, Luftbefeuchter u.dgl. angeordnet sein. Ferner besteht die Möglichkeit, die Außenwand des weiteren Hilfsraumes als Sonnenkollektor auszubilden, der Wärme aus der Sonnenstrahlung und/oder der Umgebungsluft des Gebäudes aufnimmt und in das Gebäudeinnere überträgt. Ein derartiger Sonnenkollektor wird ebenfalls an dem Installationsrahmen montiert und braucht daher nicht unmittelbar an der Gebäudewand, d.h. am Mauerwerk, befestigt zu werden. In dem weiteren Hohlraum kann auch z.B. ein chemischer Wärmespeicher untergebracht werden.

Im folgenden werden unter Bezugnahme auf die Zeichnungen Ausführungsbeispiele der Erfindung näher erläutert.

Es zeigen:

Fig. 1 eine schematische Ansicht eines wärmedämmenden Fensters von der Außenseite des Gebäudes her,

Fig. 2 einen schematischen Schnitt entlang der Linie II-II von Fig. 1,

Fig. 3 einen schematischen Schnitt entlang der Linie III-III von Fig. 1,

Fig. 4 einen vertikalen Querschnitt durch eine andere Ausführungsform des wärmedämmenden Fensters,

Fig. 5 eine Außenansicht eines bis zum Boden reichen den wärmedämmenden Fensters,

Fig. 6 einen Vertikalschnitt von Fig. 5 und

Fig. 7 ein anderes Ausführungsbeispiel für ein Klimagerät gemäß Fig. 6.

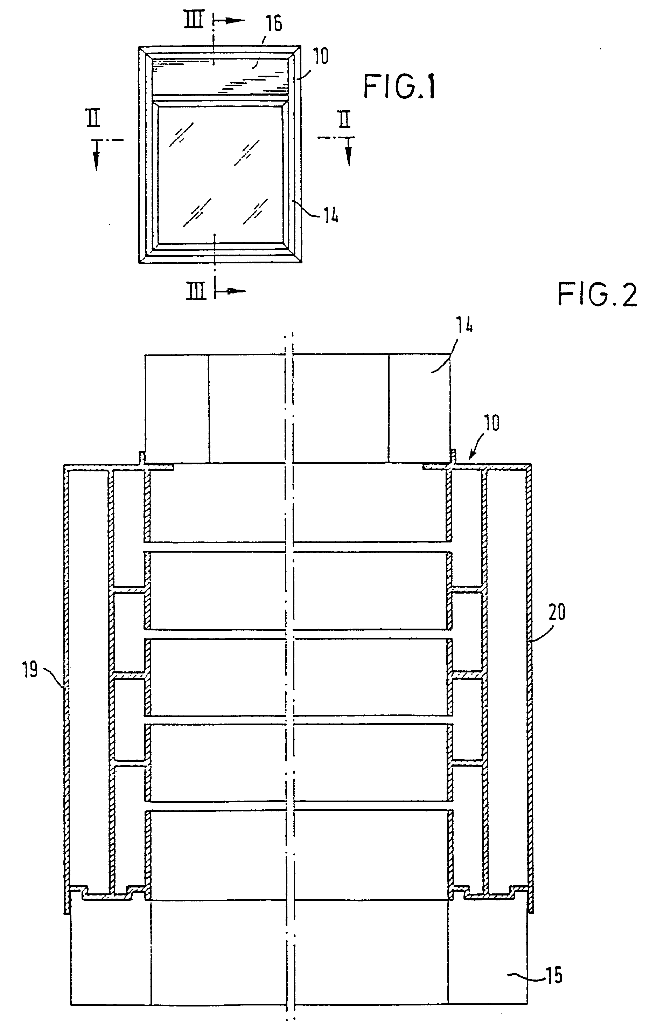

Bei dem Ausführungsbeispiel der Fign. 1 bis 3 ist ein rechteckiger Installationsrahmen 10 vorgesehen, der in eine Wandöffnung eines Gebäudes hineinpaßt und der mindestens ein Außenfenster sowie die Tragstruktur für einen wärmedämmenden Vorhang trägt. Der Installationsrahmen 10, dessen Tiefe im wesentlichen der Stärke der Gebäudewand entspricht, ist durch eine Zwischenwand 13 in einen Fensterraum 11 und einen darüberliegenden Hilfsraum 12 unterteilt. An dem außenseitigen Ende des Installationsrahmens 10 ist der Blendrahmen 14 eines Außenfensters befestigt und an dem innenseitigen Ende des Installationsrahmens 10 ist der Blendrahmen 15 eines Innenfensters befestigt. Die Blendrahmen 14 und 15 sind jeweils gegen die Stirnseite des Installationsrahmens gesetzt und mit (nicht dargestellten) Befestigungsmitteln unter Zwischenlage geeigneter Dichtungen mit dem Installationsrahmen verbunden. Die Blendrahmen 14 und 15 bestehen aus bekannten Fensterprofilen. Sie enthalten Flügelrahmen, die zu öffnen sind, so daß durch das geöffnete Fenster sowohl vom Gebäudeäußeren als auch vom Gebäudeinneren direkter Zugang zum Fensterraum 11 besteht. Der Blendrahmen 14 des Außenfensters erstreckt sich bei diesem Ausführungsbeispiel nur über die Höhe des Fensterraumes 11 des Installationsrahmens 10, so daß nur der Fensterraum nach außen hin durch das Außenfenster verschlossen ist. Der Hilfsraum 12 ist dagegen durch eine fest am Installationsrahmen 10 angebrachte Blende 16 nach außen hin verschlossen. Das Innenfenster erstreckt sich dagegen über die gesamte Höhe des Installationsrahmens, so daß beim Öffnen des Flügels des Innenfensters nicht nur Zugang zum Fensterraum 11, sondern auch zum Hilfsraum 12 besteht.

Der Installationsrahmen 10 besteht aus einer Bodenwand 17, einer Deckenwand 18 und zwei Seitenwänden 19, 20, die sämtlich die gleiche Breite haben, so daß ein kastenförmiger Rahmen mit offenen Hauptflächen gebildet wird. Die Hauptflächen werden durch das nachträglich angebrachte Innenfenster und Außenfenster, die jeweils einen zu öffnenden Flügel haben, verschlossen, bzw. durch die Blende 16.

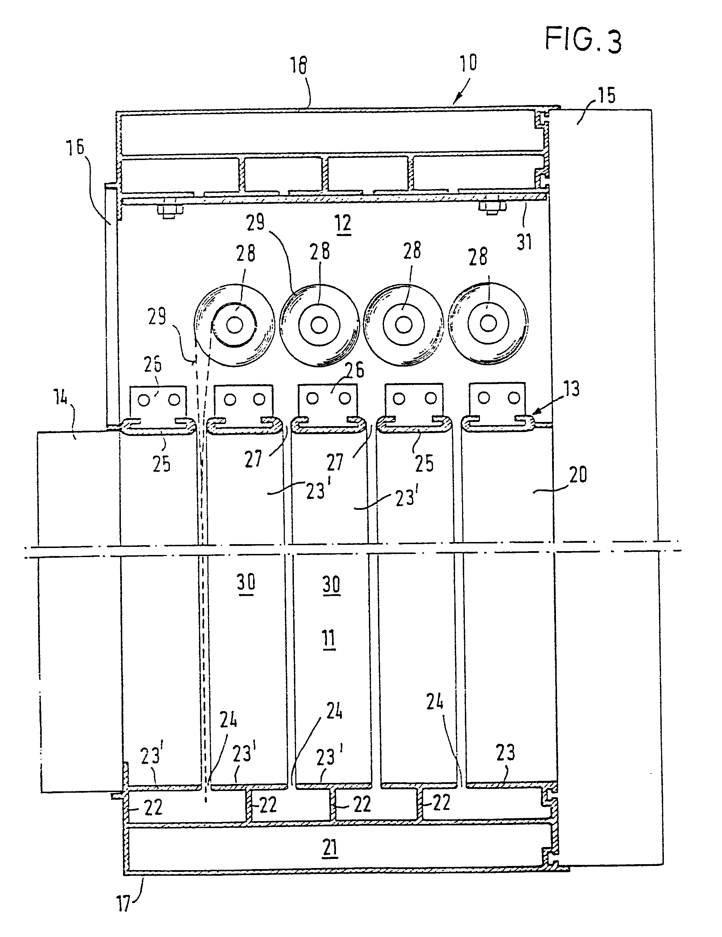

Sämtliche Wände 17 bis 20 des Installationsrahmens 10 bestehen aus dem gleichen Profil, das einen sich über die gesamte Tiefe des Installationsrahmens erstreckenden, im wesentlichen rechteckigen Kasten 21 aufweist, der den äußeren Teil der Wand bildet. Von der Innenwand des als geschlossenes Hohlprofil ausgebildeten Kastens 21 erstrecken sich Stege 22 zum Rahmeninnern bis zu der Innenwand 23 (Fig. 3). Die Innenwand 23 stellt keine durchgehende Wand dar, sondern sie besteht aus streifenförmigen Wandteilen 23', die in einer gemeinsamen Ebene angeordnet sind und von denen jeder von einem der Stege 22 getragen wird. Zwischen den Wandteilen 23' sind Schlitze 24 gebildet. Da alle Wände 17 bis 20 aus dem gleichen Profil bestehen, setzt sich ein Schlitz 24 einer der Wände in allen anderen Wänden fort, so daß im Innern des Installationsrahmens ein umfangsmäßig umlaufender Schlitz entsteht.

Die Zwischenwand 13, die parallel zu der Bodenwand 17 und der Deckenwand 18 verläuft, besteht aus einer Reihe von C-Profilen, die jeweils die Breite der Wandteile 23' haben und an diesen Wandteilen 23' mit L-förmigen Haltern 26 befestigt sind. Zwischen den C-Profilen bestehen schlitzförmige Durchlässe 27 für die Vorhangbahnen.

In dem Hilfsraum 12 sind mehrere Rollen 28, auf die Vorhangbahnen 29 aufgewickelt sind, mit horizontalen Achsen drehbar gelagert. Sämtliche Rollen 28 können durch einen (nicht dargestellten) elektrischen Antriebsmechanismus gemeinsam angetrieben werden, um alle Vorhangbahnen 29 synchron aufzurollen bzw. zu entrollen. Es ist auch möglich, die Vorhangbahnen 29 individuell zu steuern. Jede der Vorhangbahnen ist mit ihren Seitenkanten in den Schlitzen 24 geführt, so daß im Fensterraum 11 zwischen zwei Vorhangbahnen 29 jeweils eine abgeschlossene Luftkammer 30 gebildet werden kann. Die unteren Enden der Vorhangbahnen 29 können durch den Schlitz 24 der Bodenwand 17 hindurchgeführt werden, so daß die Luftkammern 30 auch bodenseitig abgeschlossen werden können. Im Bereich des Hilfsraumes 12 sind die Stege 22 und die Wandteile 23' des Profiles entfernt worden, so daß die Rollen 28 mit den aufgewickelten Teilen der Vorhangbahnen 29 sich zwischen den Kastenprofilen 21 der Seitenwände 19 und 20 erstrecken können.

Der Hilfsraum 12, der über dem Fensterraum 11 angeordnet ist, enthält auch die Steuerungs- und Antriebselemente für die Rollen 28. Diese Steuerungs- und Antriebselemente, die nicht dargestellt sind, sind an einer Tragplatte 31 befestigt, welche unter der Deckenwand 18 angebracht ist.

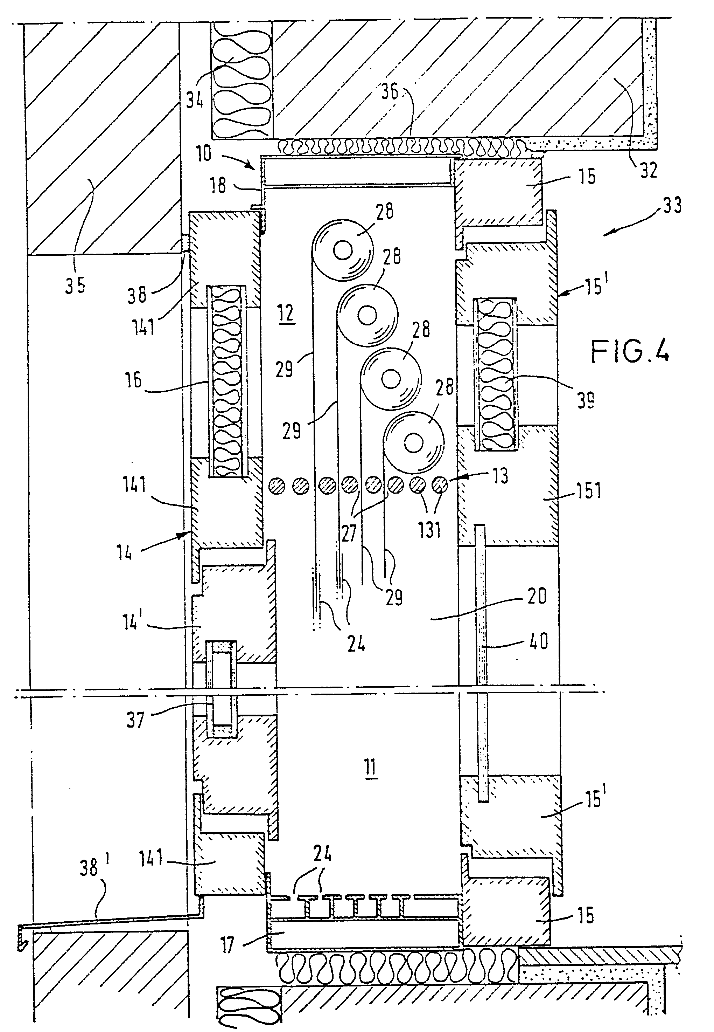

Bei dem Ausführungsbeispiel der Fig. 4 ist die Gebäudewand 32 dargestellt, in deren Wandöffnung 33 der Installationsrahmen 10 eingesetzt ist. Die Wand 32 weist an ihrer Außenseite eine Wärmedämmschicht 34 auf und vor der Wärmedämmschicht 34 ist mit seitlichem Abstand die Außenhaut 35 in Form einer Fassadenverkleidung angeordnet. Die Wandöffnung 33 ist mit einer weiteren Wärmedämmschicht 36 ausgekleidet, die den Installationsrahmen 10 umgibt. An der Außenseite des Installationsrahmens 10 ist der Blendrahmen 14 befestigt, der sich über die Höhe des Fensterraumes 11 und über die Höhe des Hilfsraumes 12 erstreckt und der in Höhe der Zwischenwand 13 einen Quersteg 141 aufweist. Der Blendrahmen 14 besteht aus einem bekannten Blendrahmen-Profil, das hier nicht näher erläutert werden muß. In der Öffnung des Blendrahmens 14 sitzt ein Flügelrahmen 14', der zum Fensterraum 11 hin, also nach innen, geöffnet werden kann und zu diesem Zweck gelenkig an dem Blendrahmen 14 befestigt ist. Der Flügelrahmen 14 enthält eine Fensterscheibe 37, im vorliegenden Fall aus Isolierglas (Doppelglas). Das oberhalb der Querstrebe 141 angeordnete Feld des Blendrahmens 14 enthält eine undurchsichtige Blende 16, die den Hilfsraum 12 nach außen abschließt. Wie aus Fig. 4 ersichtlich ist, überdeckt die Außenhaut 35 den oberen Rand des Blendrahmens 14, der von innen her unter Zwischenlage einer Dichtung 38 gegen die Außenhaut 35 gesetzt ist. Zwischen dem unteren Ende des Blendrahmens 14 und der Außenhaut 35 ist eine Fensterbank 38' vorgesehen.

In dem Installationsrahmen 10 sind die Rollen 28, welche die Vorhangbahnen 29 tragen, in der Höhe gestaffelt angeordnet, wobei jeweils eine Rolle schräg oberhalb der darunter angeordneten Rolle positioniert ist. Auf diese Weise können die Abstände der Schlitze 24 und der Vorhangbahnen 29 verringert werden. Die Tiefe des Installationsrahmens 10 wird auf deise Weise kleiner als die Tiefe der Wand 32.

Zum Innern des Gebäudes hin ist am Installationsrahmen 10 ein innerer Blendrahmen 15 befestigt, an dem ein Flügelrahmen 15' angebracht ist, der zum Gebäudeinnern hin aufgeschwenkt werden kann. Der Flügelrahmen 15' weist in Höhe der Zwischenwand 13 eine Querstrebe 151 auf. Dasjenige Feld des Flügelrahmens 15', das den Hilfsraum 12 verschließt, enthält eine undurchsichtige Blende 39. Dasjenige Feld des Flügelrahmens 15', das den Fensterraum 16 des Installationsrahmens 10 verschließt, enthält dagegen eine Glasscheibe 40. Wird der Flügelrahmen 15' geöffnet, dann ist vom Gebäudeinnern her sowohl der Fensterraum 11, als auch der Hilfsraum 12 zugänglich.

Die Zwischenwand 13 besteht bei dem Ausführungsbeispiel der Fig. 4 aus einzelnen Rundstäben 131, die zwischen den Seitenwänden 19 und 20 des Installationsrahmens 10 verlaufen, und zwischen denen die Schlitze 27 für den Durchtritt der Vorhangbahnen 29 gebildet sind.

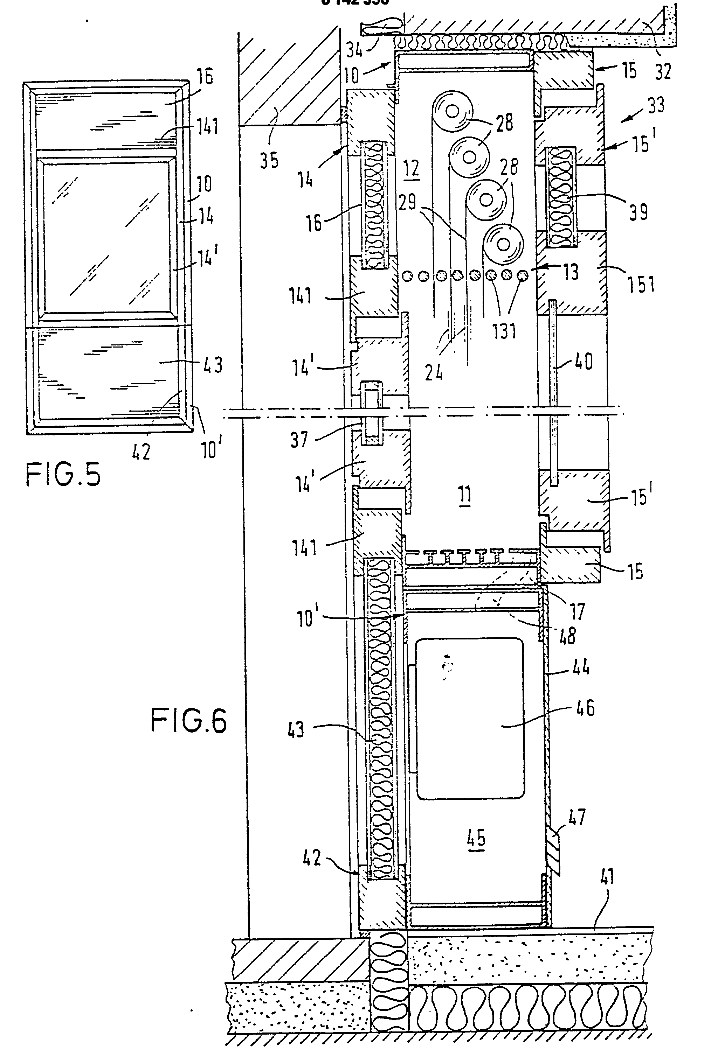

Das Ausfürungsbeispiel der Fign. 5 und 6 entspricht weitgehend demjenigen der Fig. 4, so daß nachstehend nur noch die Unterschiede erläutert werden. Die Wandöffnung 33 erstreckt sich bis zum Fußboden 41 des Raumes und der Installationsrahmen 10 ist nach unten hin durch ein zusätzliches Rahmenteil 10' verlängert, das die gleiche Tiefe aufweist. Vor dem unteren Rahmenteil 10' befindet sich ein Blendrahmen 42, der fest an dem Installationsrahmen 10, 10' angebracht ist und eine feste Blende 43 enthält. Der Rahmenteil 10' des Installationsrahmens 10, 10' ist zum Gebäudeinnern hin mit einer weiteren Blende 44 verschlossen. In dem Raum 45 des Rahmenteils 10' ist ein Klimagerät 46 mit beispielsweise Luftbefeuchter, elektrischen Antrieben, Leitungen, Steuergeräten oder anderen Teilen untergebracht.

Der Raum 45 kann auch eine mit dem Innenraum des Gebäudes in Verbindung stehende Lufteinlaßöffnung zum Ansaugen kalter Raumluft enthalten, die entweder nach Erwärmung in den Raum zurückgefürt wird oder zur Erwärmung zunächst dem Fensterraum 11 zugeführt und anschließend wieder in den Innenraum des Gebäudes eingeleitet wird.

Die Blende 44 enthält eine Öffnung 47, die den Gebäuderaum mit dem Raum 45 verbindet, so daß Luft aus dem Gebäuderaum zum Klimagerät 46 gelangen kann. Auf diese Weise ist eine dezentralisierte Wohnungslüftung mit Wärmerückgewinnung möglich. Von dem Raum 45 führt ein Kanal 48 in den Fensterraum 11 hinein, so daß die Folienbahnen 29 auch als Luftkollektor benutzt werden können.

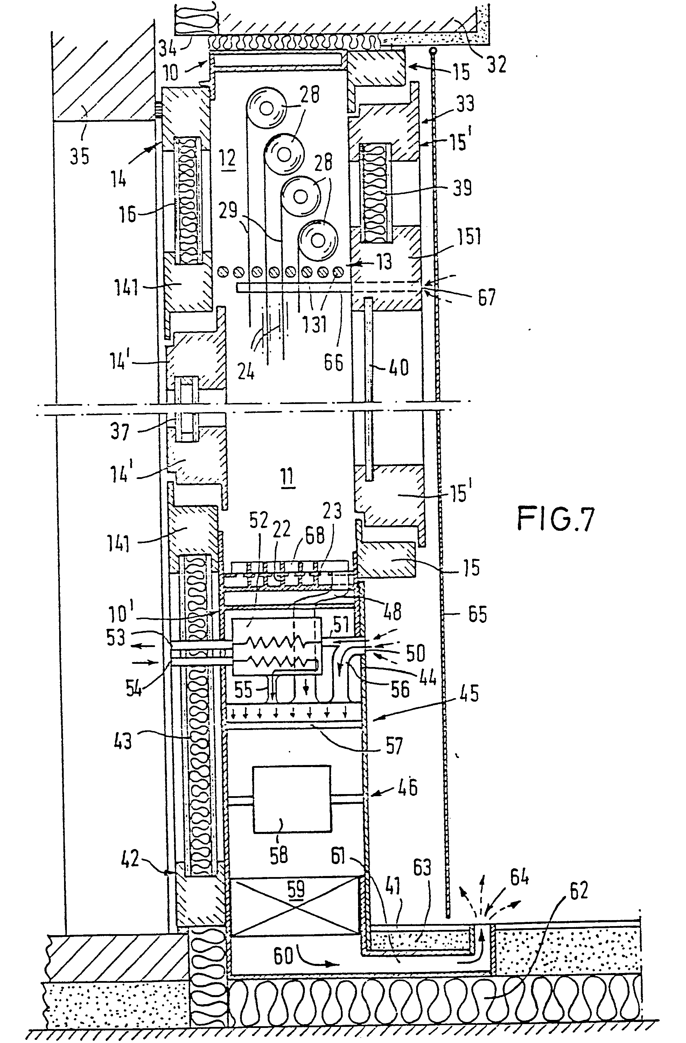

Bei dem Ausführungsbeispiel der Fig. 7 ist eine schlitzförmige Lufteintrittsöffnung 50 am oberen Ende des Raumes 45 in der Blende 44 vorgesehen, die sich über die gesamte Breite der Blende erstreckt. Die hierdurch angesaugte Raumluft soll umgewälzt, gereinigt, teilweise gegen Frischluft ausgetauscht und aufgeheizt bzw. gekühlt werden. Ggf. kann, wie bereits erwähnt, zusätzlich noch eine in Fig. 7 nicht dargestellte Luftbefeuchtungseinrichtung vorgesehen sein. Der durch die Lufteintrittsöffnung 50 angesaugte Raumluftstrom wird in einen im Querschnitt im wesentlichen der rechteckigen Lufteintrittsöffnung 50 angepaßten Hauptkanal 56 eingeleitet, von dem über eine Abzweigleitung 51 ein Teilluftstrom in einen Abluft/Frischluftwärmetauscher 52 geleitet wird. Dieser saugt im Umfang der über eine Leitung 53 weggeführten Abluft Frischluft über eine Leitung 54 an und wärmt die Frischluft im Gegenstrom zur Abluft auf. Der Abluft/Frischluftwärmetauscher 52 verfügt hierzu über selbständige, in Fig. 7 nicht dargestellte Gebläseeinheiten, die jeweils einen gleichen Luftvolumenstrom fördern. Der zum Austausch gegen Frischluft abgezweigte Teilluftstrom kann über einen Regler, der an der Blende 44 bedienbar ist, geregelt werden und ggf. bei Bedarf ganz abgeschaltet werden. Der Wärmetauscher ermöglicht eine ständige Frischluftzufuhr auch im Winter, ohne dadurch zu hohe Wärmeverluste in Kauf nehmen zu müssen.

Die aufgewärmte Frischluft wird über eine von dem Wärmetauscher 52 wegführende Leitung 55 zusammen mit der über den Hauptkanal 56 zuströmenden Raumluft in einen Hohlraum über einem Luftfilter 57 geführt und dort mit der Raumluft vermischt. Alternativ kann die Rohrleitung 55 so verlaufen, daß die Frischluft unter Umgehung des Luftfilters 57 und einer Gebläseeinheit 58 direkt auf eine Heizeinrichtung 59 geführt und dort erst mit der Raumluft vermischt wird.

Zusätzlich zu der Rohrleitung 55 und dem Hauptkanal 56 kann wahlweise der Kanal 48, der in den Fensterraum 11 hineinführt, in den Hohlraum vor dem Luftfilter 57 münden, so daß durch Sonneneinstrahlung erwärmte Luft aus dem als Luftkollektor dienenden Fensterraum 11 abgesaugt werden kann und zur Heizung der Raumluft genutzt werden kann. Zur Absaugung der im Fensterraum 11 durch Sonneneinstrahlung aufgeheizten Luft ist im Fensterbereich in der Querstrebe 151 eine Bohrung 67 für die Zufuhr von Frischluft vorgesehen, die den Gebäuderaum mit dem Fensterraum 11 verbindet. Im Anschluß an die Bohrung 67 führt ein an der Seitenwand 20 befestigter Kanal 66 in den Fensterraum 11 hinein. Der Kanal 66 ist an der einen seitlichen Kante der Vorhangbahnen 29 rechtwinklig zu diesen und direkt unterhalb der Zwischenwand 13 angeordnet. Der Kanal 66 weist eine oder mehrere Öffnungen auf, die auf die Luftkammern 30 der Vorhangbahn 29 gerichtet sind und die die über den Kanal 48 am unteren Ende der Vorhangbahn 29 abgesaugte Luft sofort aus dem Gebäuderaum ersetzen.

Am unteren Ende der Vorhangbahn 29 werden die Luftkammern 30 über einen weiteren im wesentlichen dem Kanal 66 entsprechenden Kanal 68 abgesaugt und die aufgewärmte Luft dem Kanal 48 zugeführt. Der Kanal 68 ist an der Seitenwand 20 in Höhe der Innenwand 23 befestigt und seine Öffnungen sind zum Absaugen der Luft auf die Luftkammern 30 gerichtet. Dabei sind die Stege 22 über die Innenwand 23 hinaus nach oben verlängert. Am gebäuderaumseitigen Ende des Kanals 68 ist der Kanal 48 angeschlossen, der beispielsweise über eine an der Blende 44 einstellbare Drosselklappe verschließbar ist, so daß die Warmluftabsaugung im Fensterraum 11 bedarfsabhängig zugeschaltet und auf das Luftfilter 57 geleitet werden kann.

Das Luftfilter 57 besteht beispielsweise aus einem auf einem herausziehbaren Drahtrost abgestützten Faservlies und erstreckt sich bodenparallel über die gesamte Breite und Tiefe des Raumes 45, um eine geringe Filteranströmgeschwindigkeit zu erhalten. Die umzuwälzende Raumluft wird durch das Luftfilter 57 ständig gereinigt, so daß sich in dem Gebäuderaum erheblich weniger Luftstaub z.B. auf die Möbel absetzen kann.

Unterhalb des Luftfilters 57 wird über eine Gebläseeinheit 58, z.B. einem Radiallüfter, der Unterdruck an dem Luftfilter 57 und damit schließlich auch an der Lufteintrittsöffnung 50 und an dem Kanal 48 erzeugt. Die Raumluft gelangt nach dem Durchströmen des Luftfilters 57, währenddessen die Raumluft von Staubteilchen gereinigt wird, in die Saugseite der Gebläseeinheit 58, die den umzuwälzenden Raumluftstrom in eine Heizeinrichtung 59, z.B. einen Konvektor fördert, der seine Leistung im wesentlichen in Abhängigkeit von der Intensität der Konvektionsströmung abgibt. Aus diesem Grunde ist die Gebläseeinheit 58 thermostatisch über einen Raumthermostaten geregelt, der in vorteilhafter Weise eine individuelle Temperaturregelung für jeden Raum in Verbindung mit dem Klimagerät 46 ermöglicht. Der Konventor 59 kann an eine herkömmliche Warmwasserheizungsanlage angeschlossen werden oder kann beispielsweise zum Kühlen auch mit einem unterkühlten Medium betrieben werden. Der Konvektor 59 hat den Vorteil gegenüber konventionellen Radiatoren, keine wesentlichen Strahlungsverluste aufzuweisen. Er benötigt zur Regelung der abgegebenen Heiz- oder Kühlleistung auch keine Regelventile, die Strömungsgeräusche verursachen können, da die Regelung über die Drehzahl der Gebläseeinheit erfolgt. Der Konvektor kann, um mehr Heizfläche in dem zur Verfügung stehenden Raum 45 unterzubringen, schräg um seine Längsachse geneigt eingebaut sein.

Es kann sowohl eine Heiz- als auch eine Kühleinrichtung vorgesehen sein, wobei die Luftführung der mit der Gebläseeinheit 58 geförderten Raumluft wahlweise erfolgt, z.B. im Sommerbetrieb über die Kühleinrichtung und im Winterbetrieb über die Heizeinrichtung. Anstelle des Konvektors 59 kann auch eine elektrisch betriebene Heiz- oder Kühleinrichtung vorgesehen sein, so daß in einem solchen Fall Installationsanschlüsse für das Wärme- bzw. Kälteträgermedium entfallen können.

Nach Durchströmen des Konvektors 59 gelangt die Raumluft in einen unter dem Konvektor 59 angeordneten quaderförmigen Kanal 60, der sich über die gesamte Breite und Tiefe des Installationsrahmens 10' erstreckt und an dem sich gebäuderaumseitig ein horizontal verlaufender in den Gebäuderaum hineinführender quaderförmiger Kanalabschnitt 61 anschließt. Dieser Kanalabschnitt 61 verläuft unterhalb des Fußbodens, erstreckt sich ebenfalls über die gesamte Breite des Installationsrahmens 10' und ist vorzugsweise zwischen einer Isolationsschicht 62 der Bodenkonstruktion und dem Estrich 63 angeordnet. Am Ende des horizontalen Kanalabschnitts 61 befindet sich eine schlitzförmige vertikal nach oben gerichtete Luftaustrittsöffnung 64, die sich ebenfalls über die gesamte Breite des Installationsrahmens 10' erstreckt und über die die umgewälzte, gereinigte und aufgeheizte bzw. gekühlte Raumluft mit geringer Strömungsgeschwindigkeit wieder zurückgeführt wird. Die Austrittsöffnung 64 ist zweckmäßigerweise mit einem begehbaren Gitterrost versehen. Der horizontale Kanalabschnitt 61 erstreckt sich so weit in den Raum hinein, daß die Luftaustrittsöffnung 64 vorgelagert ist und die ausströmende Raumluft bei üblicherweise vor dem Fenster angebrachten Vorhängen 65 vom Gebäuderaum aus gesehen vor den Vorhängen 65 frei in den Gebäuderaum an der tiefstmöglichen Stelle austreten kann. Das hat den Vorteil, daß sich zwischen Vorhang 65 und dem Fenster nicht wie bei konventionellen Raumheizungen mit Heizkörpern unter den Fenstern ein Wärmepolster zwischen Vorhang 65 und Fenster bildet, das zu erhöhten Wärmeverlusten an den Fensterflächen führt. Vielmehr bildet sich zwischen Fenster und Vorhang 65 ein kühles Luftpolster, das kaum zirkuliert und dadurch stark isolierend wirkt und daher einen erheblich geringeren Wärmeverlust am Fenster ermöglicht. Dagegen bildet sich vom Gebäuderaum aus gesehen vor dem Vorhang 65 eine warme Luftströmung, die ungehindert nach oben strömt und dann frei im Gebäuderaum zirkuliert. Die ungehinderte Luftzirkulation ermöglicht eine schnelle Anpassung an Temperaturschwankungen. Da keine erwärmte, Staubteilchen enthaltende Luft durch die Vorhänge hindurchtreten muß, ist die Verschmutzung von Vorhängen bzw. Gardinen auf ein Mindestmaß reduziert.

Wenn der Konvektor 59 aus Platzgründen nicht im Raum 45 untergebracht werden kann, ist der Einbau des Konvektors 59 unmittelbar unter der Luftauttrittsöffnung 64 möglich.

Die Blende 44 ist in vorteilhafter Weise abnehmbar gestaltet, so daß sämtliche Installationseinrichtungen im Raum 45 frei zugänglich sind, was beispielsweise auch für den Filterwechsel von Bedeutung ist.

In der Heizperiode kann das Wärmeträgermedium der Heizung den Konvektor ständig durchströmen. Die Regelung der Heizleistung erfolgt mit der Gebläseeinheit 58 über einen Raumthermostaten. Selbst bei einem regelungsbedingten Stillstand der Gebläseeinheit 58 verbleibt eine Restheizung in Höhe von etwa 10% der maximalen Heizleistung, die dazu dienen kann, den Frischluftanteil, der auch bei einem Stillstand der Gebläseeinheit 58 weiterhin aufgrund der selbständigen Gebläseeinheiten im Wärmetauscher 52 das Klimagerät 46 durchströmt, zusätzlich aufzuheizen.

Entsprechend kann im Sommer die Kühleinrichtung ständig mit dem Kühlmedium durchströmt sein, wobei die Kühlleistung im wesentlichen von der Raumluftumwälzungsgeschwindigkeit abhängt. Bei Stillstand der Gebläseeinheit 58 reicht die Restkühlung aus, um den Frischluftanteil zu kühlen.

Die Vorteile des beschriebenen Klimagerätes bestehen in den niedrigen Installationskosten, in der schnellen Regelbarkeit der Heiz- bzw. Kühlleistung und damit in der Möglichkeit der Anpassung zwischen Tag und Nacht, zwischen strahlungsintensiven Wetterlagen und bedeckten Wetterlagen und in der individuellen Klimaregelung für jeden Gebäuderaum.

Das beschriebene Klimagerät ermöglicht ferner eine Frischluftzufuhr ohne die sonst dabei üblichen Nachteile des Kaltlufteinfalls in kalten Jahreszeiten und ohne Zugerscheinungen.

Im Gegensatz zu herkömmlichen Radiatoren ist das beschriebene Klimagerät sehr platzsparend und insbesondere in Verbindung mit dem wärmedämmenden Fenster sehr vorteilhaft, indem in der Heizperiode durch Sonneneinstrahlung erhitzte Luft aus dem Fensterraum 11 zur Heizung ausgenutzt wird.

In der Altbausanierung ist das beschriebene Klimagerät leicht nachrüstbar, wobei in den Fällen, in denen der Kanalabschnitt 61 nicht im Fußboden 41 eingelassen werden kann, die Luftaustrittsöffnung 64 direkt in Sockelleistenhöhe angeordnet ist.

Das Klimagerät 46 ist in einem im wesentlichen L-förmigen modularen Gehäuse eingebaut, das auf einfachste Weise in einen Installationsrahmen 10' eingebaut werden kann. Dies hat den Vorteil, daß bei der Bauausführung zunächst nur der Installationsrahmen 10,10', z.B. für ein wärmedämmendes Fenster mit Klimagerät 46 eingebaut werden muß, die Entscheidung über die einzelnen Klimaaggregate des Klimageräts 46 oder über die Fensterausführungen aber erst zum Schluß gefällt werden muß.

Der gemeinsame Installationsrahmen 10,10' ermöglicht insbesondere die einfache Kombination des wärmedämmerden Fensters mit einem Klimagerät 46, so daß bei Sonneneinstrahlung das Fenster als Luftkollektor verwendet werden kann.

Das Klimagerät 46 kann auch in einen nur den vertikalen Teil des L-förmigen Gehäuses umgebenden Installationsrahmen 10' eingebaut werden, wenn an der entsprechenden Wand keine Fenster vorgesehen sind.

**Patentansprüche**

1. Wärmedämmendes Fenster für Gebäude, mit
- einem eine Fensteröffnung begrenzenden, in eine Wandöffnung (33) einsetzbaren Blendrahmen (14), der mindestens eine in der Fensteröffnung vorgesehene Glasscheibe (37) enthält,
- einem hinter der Fensteröffnung vorgesehenen Fensterraum (11)
- und einem außerhalb des Bereichs des Fensterraumes angeordneten Hilfsraum (12), in dem mehrere Rollen (28) mit aufgewickelten Vorhangbahnen (29) gelagert sind, die in den Fensterraum (11) hinein abwickelbar sind,
<u>dadurch gekennzeichnet,</u>
daß der Blendrahmen (14) an einem mit der Wand (32) verbundenen, innerhalb der Wandöffnung (33) umlaufend angeordneten Installationsrahmen (10) befestigt ist, der den Fensterraum (11) und den Hilfsraum (12) enthält.

2. Wärmedämmendes Fenster nach Anspruch 1, dadurch gekennzeichnet, daß der Hilfsraum (12) von dem Fensterraum (11) durch eine Zwischenwand (13) getrennt ist, die Schlitze (27) für den Durchtritt der Vorhangbahnen (29) aufweist.

3. Wärmedämmendes Fenster nach Anspruch 1 oder 2, dadurch gekennzeichnet, daß der Fensterraum (11) zum Gebäudeinnern hin durch mindestens eine weitere Glasscheibe (40) begrenzt ist.

4. Wärmedämmendes Fenster nach Anspruch 3, dadurch gekennzeichnet, daß die weitere Glasscheibe (40) in einem inneren Flügelrahmen (15') befestigt ist, der an einem weiteren Blendrahmen (15) angebracht ist, welcher seinerseits an dem Installationsrahmen (10) befestigt ist.

5. Wärmedämmendes Fenster nach Anspruch 4, dadurch gekennzeichnet, daß der weitere Blendrahmen (15) und der innere Flügelrahmen (15') sich über die gesamte Höhe des Fensterraumes (11) und des Hilfsraumes (12) erstrecken.

6. Wärmedämmendes Fenster nach Anspruch 5, dadurch gekennzeichnet, daß der innere Flügelrahmen (15') im Bereich des Hilfsraumes (12) eine undurchsichtige Blende (39) aufweist.

7. Wärmedämmendes Fenster nach einem der Ansprüche 1 bis 6, dadurch gekennzeichnet, daß der Installationsrahmen (10) an seinen Seitenwänden vertikale Führungsschlitze (24) aufweist, in die die Ränder der Vorhangbahnen (29) eingreifen.

8. Wärmedämmendes Fenster nach einem der Ansprüche 1 bis 7, dadurch gekennzeichnet, daß der Installationsrahmen (10) eine Bodenwand (17) mit Schlitzen (24) zum Eingreifen der unteren Kanten der Vorhangbahnen (29) aufweist.

9. Wärmedämmendes Fenster nach einem der Ansprüche 1 bis 8, dadurch gekennzeichnet, daß unter dem Fensterraum (11) ein weiterer Hilfsraum (45) zur Aufnahme von Klimageräten, Steuergeräten u.dgl. angeordnet ist.

10. Wärmedämmendes Fenster nach Anspruch 9, dadurch gekennzeichnet, daß der weitere Hilfsraum (45) mit dem Fensterraum (11) in luftdurchlässiger Verbindung steht.

11. Wärmedämmendes Fenster nach Anspruch 9 oder 10, dadurch gekennzeichnet, daß der weitere Hilfsraum (45) ein Klimagerät (46) enthält, das
- ein im wesentlichen L-förmiges Gehäuse mit einem in den Raum weisenden horizontalen Schenkel,
- raumseitige und außenseitige Lufteintritts- und austrittsöffnungen (50, 64; 53, 54),
- Luftförder- und Luftverteileinrichtungen (51, 55, 56, 58)
- und eine Heiz- und/oder Kühleinrichtung (59) aufweist, wobei eine raumseitige Luftaustrittsöffnung (64) am Ende eines den horizontalen Schenkel des Gehäuses durchlaufenden Kanalabschnitts (61) in der Ebene des Fußbodens angeordnet ist.

12. Wärmedämmendes Fenster nach Anspruch 11, dadurch gekennzeichnet, daß über eine Abzweigleitung (51) ein regelbarer Teil der umzuwälzenden Raumluft von einem Hauptkanal (56) abgezweigt ist und in einen Abluft-/Frischluft-Wärmetauscher (52) geführt ist, der im Umfang der über Leitung (53) weggeführten Abluft Frischluft ansaugt und aufgewärmte Frischluft über Leitung (55) dem Raumluftstrom zuführt.

13. Wärmedämmendes Fenster nach Anspruch 11 oder 12, dadurch gekennzeichnet, daß der Fensterraum (11) des Installationsrahmens (10) über einen Kanal (48) mit dem weiteren Hilfsraum (45) verbunden ist, um im Fensterraum erwärmte Luft dem Klimagerät (46) zuzuführen.

14. Wärmedämmendes Fenster nach einem der Ansprüche 11 bis 13, dadurch gekennzeichnet, daß der mit dem Frischluftstrom vermischte Raumluftstrom über einen Luftfilter (57) auf die Heiz- bzw. Kühleinrichtung (59) geführt ist.

15. Wärmedämmendes Fenster nach einem der Ansprüche 11 bis 14, dadurch gekennzeichnet, daß die Heiz- bzw. Kühleinrichtung (59) aus einem Konvektor besteht und daß die Luftfördereinrichtung (58) thermostatisch geregelt ist und zwischen Luftfilter (57) und Konvektor angeordnet ist.

16. Wärmedämmendes Fenster nach einem der Ansprüche 11 bis 15, dadurch gekennzeichnet, daß die Heiz- bzw. Kühleinrichtung (59) unmittelbar unterhalb der Luftaustrittsöffnung (64) am Ende des horizontalen Kanalabschnitts (61) angeordnet ist.

17. Wärmedämmendes Fenster nach einem der Ansprüche 11 bis 16, dadurch gekennzeichnet, daß das Gehäuse an seinem vertikalen Schenkel eine gebäuderaumseitig abnehmbare Blende (44) aufweist.

## Claims

1. Heat-insulating window for buildings, comprising
- a facing frame (14) confining a window opening and being insertable in a wall opening (33), the facing frame containing at least one glass pane (37) being provided in the window opening,
- a window chamber (11) provided behind the window opening,
- and an auxiliary chamber (12) arranged outside the window chamber range and in which a plurality of rollers (28) having curtain webs (29) wound on them are disposed which may be unwound into the window chamber (11),

characterized in that the facing frame (14) is secured to an installation frame (10) connected to the wall (32) and being positioned within and roundabout the wall opening (33).

2. Heat-insulating window according to claim 1, characterized in that the auxiliary chamber (12) is separated from the window chamber (11) by an intermediate wall (13) which comprises slots (27) for the passage of the curtain webs (29) therethrough.

3. Heat-insulating window according to claim 1 or claim 2, characterized in that the window chamber (11) is limited towards the building interior by at least one additional glass pane (40).

4. Heat-insulating window according to claim 3, characterized in that the additional glass pane (40) is mounted in an inner casement (15') which is fitted to another facing frame (15) fixed to the installation frame (10).

5. Heat-insulating window according to claim 4, characterized in that the other facing frame (15) and the inner casement (15') extend over the total height of the window chamber (11) and of the auxiliary chamber (12).

6. Heat-insulating window according to claim 5, characterized in that the inner casement (15') contains a non-transparent shield (39) within the area of the auxiliary chamber (12).

7. Heat-insulating window according to claims 1 to 6, characterized in that the side walls of the installation frame (10) contains vertical guide slots (24) which are engaged by the borders of the curtain webs (29).

8. Heat-insulating window according to one of claims 1 to 7, characterized in that the installation frame (10) contains a bottom wall (17) with slots (24) engaging the lower edges of the curtain webs (29).

9. Heat-insulating window according to one of claims 1 to 8, characterized by the provision of another auxiliary chamber (45) disposed beneath the window chamber (11) and adapted to house air conditioners, control instruments etc.

10. Heat-insulating window according to claim 9, characterized in that the other auxiliary chamber (45) is in a free-venting communication with the window chamber (11).

11. Heat-insulating window according to claim 9 or 10, characterized in that the other auxiliary chamber (45) contains an air conditioner (46) comprising
- a substantially L-shaped housing having a horizontal leg extending into the room,
- air inlet and air outlet openings (50, 64; 53, 54) provided each at the room-side and outside,
- air feeding and air distributing means (51, 55, 56, 58)
- and a heating and/or cooling device (59) one room-side air outlet opening (64) being arranged at the end of the horizontal channel section (61) in the plane of the floor.

12. Heat-insulating window according to claim 11, characterized in that via a branch line (51), an adjustable amount of the room air to be circulated is branched off from a main channel (56) to be conveyed to a spent air/fresh air heat exchanger (52) which, to the extent of the spent air evacuated through line (53), absorbs fresh air to supply heated fresh air through line (55) to the room air current.

13. Heat-insulating window according to claim 11 or 12, characterized in that the window chamber (11) of the installation frame (10) is connected via a channel (48) to the other auxiliary chamber (45) to feed to the air conditioner (46) air heated in the window chamber.

14. Heat-insulating window according to one of claims 11 to 13, characterized in that the room air current mixed with the fresh air current is supplied via an air filter (57) to the heating- or cooling system (59).

15. Heat-insulating window according to one of claims 11 to 14, characterized in that the heating or cooling system (59) consists of a convector and that the air feeding means (58) is controlled thermostatically and arranged between air filter (57) and convector.

16. Heat-insulating window according to one of claims 11 to 15, characterized in that the heating or cooling system (59) is provided directly beneath the air outlet opening (64) at the end of the horizontal channel section (61).

17. Heat-insulating window according to one of claims 11 to 16, characterized in that the vertical leg of the housing is provided with a facing (44) removable from the building room side.

## Revendications

1. Fenêtre calorifuge pour bâtiment, comportant:
- un cadre dormant (14) limitant une ouverture de fenêtre pouvant se placer dans une ouverture de paroi (33), lequel cadre contient au moins une vitre (37) prévue dans l'ouverture de la fenêtre,
- un espace fenêtre (11) prévu derrière l'ouverture de la fenêtre,
- et un espace auxiliaire (12) disposé à l'extérieur de la zone de l'espace fenêtre et dans lequel sont placés plusieurs rouleaux (28) avec des panneaux de rideau enroulés (29), que l'on peut dérouler à l'intérieur dans l'espace fenêtre (11),

caractérisée en ce que le cadre dormant (14) est fixé à un cadre d'installation (10) qui est relié à la paroi (32), qui est disposé sur tout le périmètre à l'intérieur de l'ouverture de la paroi (33) et qui contient l'espace fenêtre (11) et l'espace auxiliaire (12).

2. Fenêtre calorifuge selon la revendication 1, caractérisée en ce que l'espace auxiliaire (12) est séparé de l'espace fenêtre (11) par une paroi intermédiaire (13), qui présente des fentes (27) pour le passage des panneaux de rideau (29).

3. Fenêtre calorifuge selon la revendication 1 ou 2, caractérisée en ce que l'espace fenêtre (11) est limité, en direction de l'intérieur du bâtiment, par au moins une autre vitre (40).

4. Fenêtre calorifuge selon la revendication 3, caractérisée en ce que l'autre vitre (40) est fixée dans un cadre battant intérieur (15'), qui est rapporté contre un autre cadre dormant (15), qui, de son côté, est fixé au cadre de l'installation (10).

5. Fenêtre calorifuge selon la revendication 4, caractérisée en ce que l'autre cadre dormant (15) et le cadre battant intérieur (15') s'étendent sur l'hauteur totale dé l'espace fenêtre (11) et de l'espace auxiliaire (12).

6. Fenêtre calorifuge selon la revendication 5, caractérisée ce que le cadre battant intérieur (15') présente, dans la zone de l'espace auxiliaire (10), un écran non transparent (39).

7. Fenêtre calorifuge selon l'une des revendications 1 à 6, caractérisée en ce que le cadre d'installation (10) présente, sur ses parois latérales, des fentes verticales de guidage (24), dans lesquelles pénètrent les bords des panneaux de rideau (29).

8. Fenêtre calorifuge selon l'une des revendications 1 à 7, caractérisée en ce que le cadre d'installation (10) présente une paroi de plancher (17) avec des fentes (24) pour y faire pénétrer les bords inférieurs des panneaux de rideau (29).

9. Fenêtre calorifuge selon l'une des revendications 1 à 8, caractérisée en ce que sous l'espace fenêtre (11) est disposé un autre espace auxiliaire (45) destiné à recevoir des appareils de climatisation, des appareils de commande et analogues.

10. Fenêtre calorifuge selon la revendication 9, caractérisée en ce que l'autre espace auxiliaire (45) est en liaison perméable à l'air avec l'espace fenêtre (11).

11. Fenêtre calorifuge selon la revendication 9 ou 10, caractérisée en ce que l'autre espace auxiliaire (45) contient l'appareil de climatisation (46) qui présente:

- un carter sensiblement en forme de L avec une aile horizontale dirigée dans l'espace intérieur du bâtment,
- des ouvertures d'entrée et de sortie d'air côté espace intérieur du bâtiment et côté extérieur (50, 64; 53, 54),
- des dispositifs de transport de l'air et de distribution de l'air (51, 55, 56, 58),

- et un dispositif de chauffage et/ou refroidissement (59),

étant précisé qu'une ouverture de sortie d'air, côté espace, (64), est disposée dans le plan du plancher, à l'extrémité d'une portion de canal (61), qui parcourt l'aile horizontale du carter.

12. Fenêtre calorifuge selon la revendication 11, caractérisé en ce qu'une partie réglable de l'air ambiant à recycler est dérivée d'un canal principal par l'intermédiaire d'une conduite de dérivation (51) et est conduite dans un échangeur thermique air vicié/air frais (52), qui aspire l'air frais d'un volume correspondant à celui de l'air vicié évacué par une conduite (53) et amène l'air frais chauffé dans le courant d'air ambiant par l'intermédiaire d'une conduite (55).

13. Fenêtre calorifuge selon la revendication 11 ou 12, caractérisée en ce que l'espace fenêtre (11) du cadre d'installation (12) est relié, par l'intermédiaire d'un canal (48), à l'autre espace auxiliaire (45), pour amener à l'appareil de climatisation (46) l'air réchauffé dans l'espace fenêtre.

14. Fenêtre calorifuge selon l'une des revendications 11 à 13, caractérisée en ce que le courant d'air ambiant, mélangé avec le courant d'air frais, est conduit, par l'intermédiaire d'un filtre à air (57), au dispositif de chauffage ou de refroidissement (59).

15. Fenêtre calorifuge selon l'une des revendications 11 à 14, caractérisée en ce que l'appareil de chauffage ou refroidissement (59) est constitué d'un convecteur, et en ce que le dispositif de transport de l'air (58) est régulé thermostatiquement et est disposé entre le filtre à air (57) et le convecteur.

16. Fenêtre calorifuge selon la revendication 11 à 15, caractérisée en ce que le dispositif de chauffage ou de refroidissement (59) est disposé immédiatement sous l'ouverture de sortie d'air (64) à l'extrémité de la portion horizontale du canal (61).

17. Fenêtre calorifuge selon l'une des revendications 11 à 16, caractérisée en ce que le carter présente, sur son aile verticale, un écran amovible (44) côté espace intérieur du bâtiment.

FIG.1

FIG.2

FIG.3

FIG.4

0 142 596

FIG.5

FIG.6

FIG.7